# EUROPÄISCHE PATENTSCHRIFT

(11) **EP 3 265 202 B1**
(45) Veröffentlichungstag und Bekanntmachung des Hinweises auf die Patenterteilung: **17.02.2021**
(21) Anmeldenummer: 16707388.1
(22) Anmeldetag: 24.02.2016
(51) Int. Cl.: B01D 29/52, B01D 29/66

(54) **SYSTEM ZUM FILTRIEREN VON FLUIDEN**
SYSTEM FOR FILTERING FLUIDS
DISPOSITIF DE FILTRATION DE FLUIDES

(30) Priorität: 05.03.2015 DE 102015002767
(43) Veröffentlichungstag der Anmeldung: 10.01.2018
(73) Patentinhaber: Hydac Process Technology GmbH, 66538 Neunkirchen (DE)
(72) Erfinder: BREINIG, Markus, 50226 Frechen (DE); HRIN, Sebastian, 50189 Elsdorf (DE); LINGEN, Hans-Jürgen, 41069 Mönchengladbach (DE)
(74) Vertreter: Bartels und Partner, Patentanwälte
(86) Internationale Anmeldenummer: PCT/EP2016/000317
(87) Internationale Veröffentlichungsnummer: WO 2016/138983

(56) Entgegenhaltungen:
- DE-A1-102011 100 518
- US-A- 3 542 197
- US-A- 5 846 420
- US-A1- 2005 170 492

## Beschreibung

Die Erfindung betrifft ein System zum Filtrieren von Fluiden mit den Merkmalen im Oberbegriff des Anspruchs 1.

Um über längere Betriebszeiträume hinweg den sicheren und effizienten Betrieb von Filteranlagen zu ermöglichen, ist es, insbesondere bei größeren Anlagen, üblich, die beim Filtrationsvorgang beteiligten Filterelemente rückzuspülen und dadurch zu regenerieren. Während jeweiliger Rückspülphasen wird das zu reinigende Filterelement durch einen Teilstrom des Filtrats in umgekehrter Richtung durchströmt, um den Schmutz vom Element abzulösen und zusammen mit der abströmenden Rückspülmenge auszutragen. Angesichts der hochgradigen Umweltschädlichkeit der mit den Verschmutzungen belasteten Rückspülflüssigkeit ist die Entsorgung problematisch. Zumindest bei größeren Mengen anfallender Spülflüssigkeit ist eine Nachbehandlung oder Aufbereitung erforderlich, wie eine Filtration zur Absonderung veraschbarer Verschmutzungen. Bei der Filtration von Schwerölen, wie sie zum Betrieb von Großdieseln, wie Schiffsdieseln, benutzt werden, erschwert die hohe Viskosität des Schweröls sowohl den Rückspülvorgang beim Primärfilter als auch den Filtrationsvorgang, der zur Aufbereitung mittels der Nachbehandlungseinrichtung durchzuführen ist, die dem Primärfilter nachgeschaltet ist. Um auch bei höher viskosen Fluiden eine effiziente Rückspülung beim Primärfilter sicherzustellen, ist es entsprechend der Dokumente DE 10 2011 100 518 A1 oder WO 2012/ 150011 A1 Stand der Technik, für einen jeweiligen Rückspülvorgang eine Menge an Spülflüssigkeit aus einem Kolbenspeicher zu benutzen, der mit einem Mediendruck beaufschlagbar ist, um die Rückspülmenge unter Druck durch das betreffende, rückzuspülende Filterelement hindurchzuführen, um dadurch zu ermöglichen, dass abgelöste Verschmutzungen auch bei höher viskoser Rückspülflüssigkeit ausgetragen werden.

Die US 2005/0170492 A1 offenbart ein System zum Filtrieren von Fluiden, mit einem Primärfilter, das mindestens ein Filterelement aufweist, das beim Filtrationsvorgang in einer Richtung durchströmbar und für einen Rückspülvorgang in dazu entgegengesetzter Richtung durchströmbar ist, mit einer dem Primärfilter zum Aufbereiten der von diesem abgegebenen Rückspülmengen nachgeschalteten Nachbehandlungseinrichtung, die zumindest eine die Rückspülmengen aufnehmende Filterkammer mit Fluideintritt und Fluidaustritt und mit mindestens einem Nachbehandlungs-Filterelement aufweist, und mit einer Steuereinrichtung zum portionsweisen Zuführen der jeweiligen Rückspülmenge zum zuordenbaren Nachbehandlungs-Filterelement.

Die US 3 542 197 offenbart ein weiteres System zum Filtrieren von Fluiden.

Ausgehend von diesem Stand der Technik stellt sich die Erfindung die Aufgabe, ein Filtrationssystem zur Verfügung zu stellen, das auch bei höher viskosen Fluiden nicht nur eine effiziente Rückspülung bei einem Primärfilter sicherstellt, sondern auch eine wirksame Aufbereitung der vom Primärfilter abgegebenen Rückspülmengen ermöglicht.

Erfindungsgemäß ist diese Aufgabe durch ein Filtrationssystem gelöst, das die Merkmale des Patentanspruchs 1 in seiner Gesamtheit aufweist.

Gemäß dem Kennzeichen des Anspruchs 1 zeichnet sich das erfindungsgemäße System dadurch aus, dass die Steuereinrichtung eine Steuerkammer mit einem ersten und einem zweiten Fluidraum aufweist, von denen der erste der Aufnahme der jeweiligen Rückspülmenge dient und der zweite Fluidraum mit einem Druckgas, insbesondere in Form von Druckluft, mit einem vorgebbaren Arbeitsdruck beaufschlagbar ist; und dass erster und zweiter Fluidraum der Steuerkammer von einem Trennkolben separiert sind. Dadurch ist das Filtermaterial des jeweiligen Nachbehandlungs-Filterelements von einer unter einem vorgegebenen Druck stehenden Rückspülmenge durchströmbar.

Dadurch, dass bei der Erfindung eine Steuereinrichtung für eine portionsweise erfolgende Zuführung jeweiliger Rückspülmengen zu einem zuordenbaren Nachbehandlungs-Filterelement vorhanden ist, lässt sich die Nachbehandlungs-Filtration in optimaler Weise an die Eigenschaft der aufzubereitenden Rückspülmenge, wie Viskosität und/oder Verschmutzungsart, anpassen, so dass sowohl eine wirksame Rückspülung als auch sichere Aufbereitung der anfallenden Rückspülflüssigkeit erreichbar sind.

Je nach Art und Viskosität der Rückspülflüssigkeit lässt sich der Arbeitsdruck im zweiten Fluidraum auf einen für den Nachbehandlungs-Filtrationsvorgang jeweils optimalen Wert einstellen, so dass auch bei Schwerölanwendungen, wie bei Schiffsdieseln, das als Filtrat anfallende, aufbereitete Spülöl von Verschmutzungen weitgehend frei ist.

Erster und zweiter Fluidraum der Steuerkammer sind von einem Trennkolben separiert. Durch die Trennung wird das Spülöl weder mit Arbeitsgas angereichert, noch durch den Gaseintrag abgekühlt. Dadurch lässt sich ein großer Teil des durch die Nachbehandlungseinrichtung aufbereiteten Spülöls zu der Unfiltratseite des Primärfilters rückführen, was zur Senkung des Kraftstoffverbrauchs eines betreffenden Schiffs beiträgt. Gleichzeitig fällt eine geringere Menge an letztendlich verbleibendem Spülöl an, das im Schiff gesammelt und im Hafen entsorgt werden muss.

Bei vorteilhaften Ausführungsbeispielen ist für die Zu- und Abfuhr des Druckgases in den bzw. aus dem zweiten Fluidraum der Steuerkammer eine Ventilsteuerung vorgesehen, insbesondere in Form eines elektrisch ansteuerbaren 3/2-Wegeventils, das druckgasführend mit dem zweiten Fluidraum der Steuerkammer verbunden ist.

Bei der dergestalt gesteuerten Bewegung des Trennkolbens kann der erste Fluidraum der Steuerkammer fluidführend mit der Unfiltratseite des jeweiligen Filterelements innerhalb der Filterkammer permanent verbunden sein, wobei die Filtratseite, die über das jeweilige Filterelement von dessen Unfiltratseite getrennt ist, zumindest zeitweise eine fluidführende Verbindung mit dem Fluidaustritt aufweist.

In besonders vorteilhafter Weise kann zwischen der Filtratseite des jeweiligen Filterelements innerhalb der Filterkammer und dem Fluidaustritt in die dahingehende Fluidverbindung eine weitere Ventilsteuereinrichtung geschaltet sein, insbesondere in Form eines vorzugsweise federbelasteten Rückschlagventils. Dadurch ist ein Leerlaufen der Nachbehandlungsvorrichtung verhindert.

Mit besonderem Vorteil kann auf der Seite des Fluideintritts eine weitere, dritte Ventilsteuereinrichtung vorhanden sein, die den Zutritt der jeweiligen Rückspülmenge vom Primärfilter kommend in die Nachbehandlungsvorrichtung steuert. Mit Vorteil kann hierbei ein Motorventil vorgesehen sein. Wenn die Nachbehandlungseinrichtung einem Primärfilter nachgeordnet ist, wie es in DE 10 2011 100 518 A1 offenbart ist, kann das am Spülmengenaustritt dieses Primärfilters angeordnete, in der Beschreibung dort mit 31 bezeichnete Motorventil die Ventilsteuereinrichtung am Fluideintritt bilden.

Konstruktiv kann die Nachbehandlungseinrichtung derart ausgebildet sein, dass in Fluidströmungsrichtung gesehen die Steuerkammer der Filterkammer mit dem jeweiligen Filterelement vorgeschaltet ist oder dass die Filterkammer mit dem jeweiligen Filterelement konzentrisch zur Steuerkammer angeordnet ist und diese umfasst.

Mit besonderem Vorteil kann die Anordnung so getroffen sein, dass an dem Trennkolben ein Energiespeicher, vorzugsweise in Form einer Zugfeder, angreift und dass der Energiespeicher den zweiten Fluidraum der Steuerkammer durchgreift. Für die Einleitung eines aufbereitenden Filtrationsvorgangs ist der Trennkolben mittels der Zugfeder in Richtung zur Vergrößerung des Volumens des ersten Fluidraums der Steuerkammer bewegbar, so dass in der Steuerkammer und der Filterkammer eine Art Saugeffekt erzeugt wird und die Steuerkammer sich mit einer vom vorgeschalteten Primärfilter abgegebenen Rückspülmenge füllt. Bei folgender Druckbeaufschlagung des Trennkolbens kann sodann der Nachbehandlungs-Filtrationsvorgang mit dem vorgegebenen, optimalen Druckniveau erfolgen.

Bei besonders vorteilhaften Ausführungsbeispielen weist die Nachbehandlungseinrichtung ein mit dem Primärfilter verbindbares Anschlussteil mit dem Fluideintritt für Rückspülmengen und dem Fluidaustritt für nachbehandelte Rückspülmengen auf, wobei das Anschlussteil den Träger für die Steuerkammer und zwei ihr gemeinsam zugeordnete Filterkammern bildet, die beidseits neben der Steuerkammer derart angeordnet sind, dass innerhalb des Anschlussteils der erste Fluidraum der Steuerkammer permanent mit der Unfiltratseite jeder der Filterkammern verbunden ist, deren Filtratseiten innerhalb des Anschlussteils zumindest zeitweise mit dem Fluidaustritt in Verbindung sind. Dadurch steht bei kompaktem Aufbau durch zwei Filterkammern, die durch eine zwischen ihnen angeordnete Steuerkammer gemeinsam betreibbar sind, eine besonders hohe Filterfläche für eine effiziente Aufbereitung auch größerer, anfallender Rückspülmengen zur Verfügung.

Bei Anwendungen für Fluide hoher Viskosität, wie Schweröle, ist vorzugsweise zumindest im fluidführenden Verbindungsbereich zwischen Steuerkammer und Filterkammer eine Heizung und/oder eine elektronische Druck- und/oder Temperaturmesseinrichtung angeordnet. Dadurch lassen sich, je nach Temperatur und Viskosität der von dem Primärfilter kommenden Rückspülmenge, die für den optimalen Filtrationsvorgang geeignete Temperatur sowie der Arbeitsdruck der Steuerkammer einstellen.

Mit besonderem Vorteil kann die Nachbehandlungseinrichtung dem Primärfilter derart zugeschaltet sein, dass die am Fluidaustritt der Nachbehandlungseinrichtung anfallende Fluidmenge auf die Unfiltratseite des Primärfilters unter Bildung eines geschlossenen Kreises rückführbar ist. Diese Rückführung ist insbesondere bei marinen Schwerölanwendungen besonders vorteilhaft, bei denen es Vorschrift ist, das bei der Aufbereitung anfallende Spülöl im Schiff anzusammeln. Durch die Rückführung eines großen Teils anfallenden Spülöls, wodurch sich auch der Kraftstoffverbrauch bei Schiffen indirekt senken lässt, fällt weniger Spülöl an, das schließlich im Hafen entsorgt werden muss.

Nachstehend ist die Erfindung anhand von in der Zeichnung dargestellten Ausführungsbeispielen im Einzelnen erläutert. Es zeigen:
- Fig. 1: in schematisch vereinfachter Darstellung eine teilweise vertikal aufgeschnittene, perspektivische Schrägansicht einer Ausführungsform des erfindungsgemäßen Filtrationssystems;
- Fig. 2: eine im Winkelschnitt teilweise aufgeschnittene perspektivische Schrägansicht der gesondert dargestellten Nachbehandlungseinrichtung der Ausführungsform von Fig. 1;
- Fig. 3: einen zentralen Vertikalschnitt der Nachbehandlungseinrichtung der Ausführungsform von Fig. 1 und 2;
- Fig. 4: einen Vertikalschnitt der Nachbehandlungseinrichtung entsprechend der Schnittlinie IV-IV von Fig. 3;
- Fig. 5: in leicht schematisch vereinfachter Darstellung einen Längsschnitt der gesondert dargestellten Nachbehandlungseinrichtung gemäß einer zweiten Ausführungsform des erfindungsgemäßen Systems, wobei der Ausgangszustand vor Einleiten eines Aufbereitungsvorgangs dargestellt ist;
- Fig. 6: eine der Fig. 5 entsprechende Darstellung, wobei der Zustand am Beginn eines Aufbereitungsvorgangs gezeigt ist;
- Fig. 7: eine den Fig. 5 und 6 entsprechende Darstellung, wobei der Zustand im Verlauf des Aufbereitungsvorgangs gezeigt ist; und
- Fig. 8: einen schematisch vereinfachten Längsschnitt eines abgewandelten Ausführungsbeispiels der Nachbehandlungseinrichtung gemäß einer weiteren Ausführungsform des erfindungsgemäßen Systems, wobei, wie in Fig. 5, der Zustand bei Beginn eines Aufbereitungsvorgangs gezeigt ist.

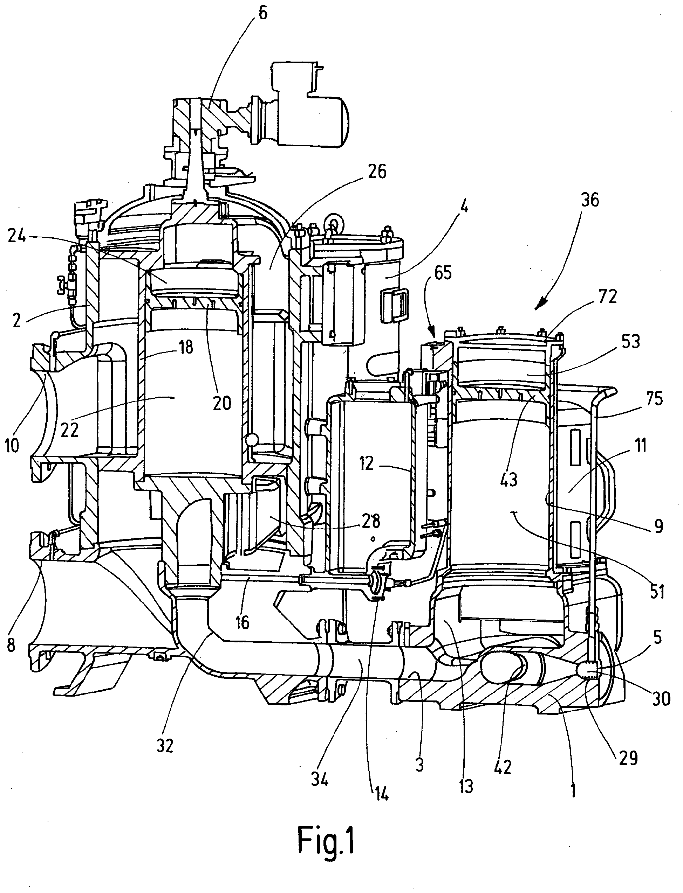

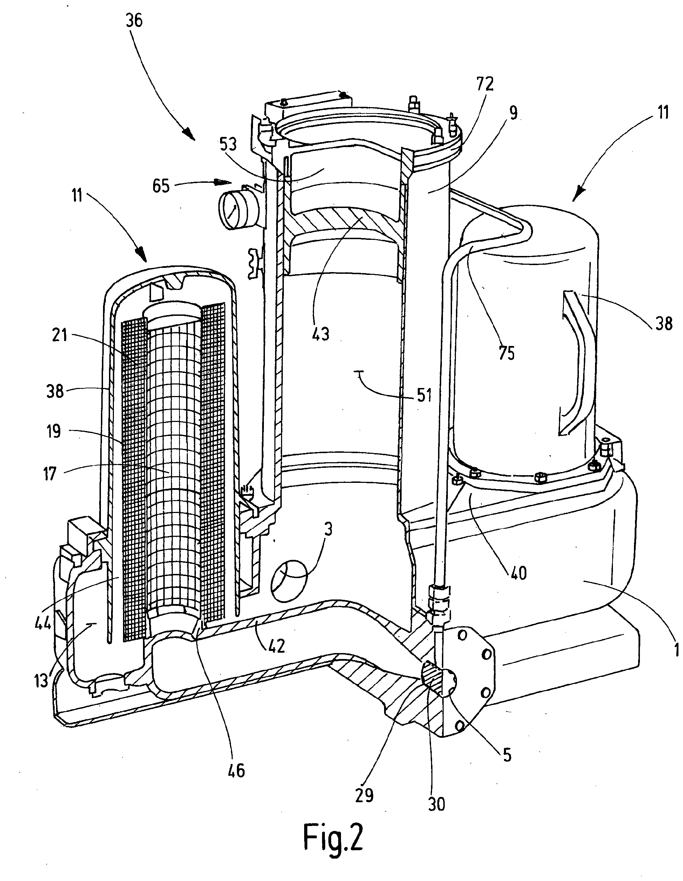

Bei der in Fig. 1 bis 4 gezeigten ersten Ausführungsform des erfindungsgemäßen Systems entspricht das Primärfilter, dessen Hauptgehäuse in Fig. 1 mit 2 bezeichnet ist, der Rückspül-Filtervorrichtung, die in dem oben genannten Dokument WO 2012/150011 A1 beschrieben ist und auf die Bezug genommen wird. In der vereinfachten Darstellung der Fig. 1 sind daher nicht sämtliche Einzelheiten dieser bekannten Vorrichtung, sondern lediglich die für das Verständnis des erfindungsgemäßen Systems wesentlichen Einzelheiten dieser Rückspül-Filtervorrichtung gezeigt, die als Primärfilter Bestandteil des erfindungsgemäßen Systems ist. Es versteht sich jedoch, dass als Primärfilter andersartige Rückspül-Filtervorrichtungen vorgesehen sein können, beispielsweise wie die in dem bereits erwähnten Dokument DE 10 2011 100 518 A1 offenbarte Vorrichtung.

Am Hauptgehäuse 2, an dem sich ein Einlass 8 für abzureinigendes Unfiltrat und ein Auslass 10 für abgereinigtes Fluid befinden, sind außenseitig Elementkammern 4 angeordnet, die jeweils ein (in Fig. 1 nicht sichtbares) Filterelement enthalten, das rückspülbar ist und bei einem Rückspülvorgang in einer zur normalen Filtrationsrichtung umgekehrten Strömungsrichtung durchströmbar ist. Zur Erzeugung einer pneumatisch unterstützten Rückspülströmung ist im Hauptgehäuse 2 ein hydropneumatischer Kolbenspeicher 18 vorgesehen, dessen Kolben 20 eine Gasseite 22 von einer Fluidseite 24 trennt. Die Fig. 1 zeigt den Kolben 20 in einer Position, in der er durch Druckluft, die der Gasseite 22 von einem Druckluft enthaltenden Spülgastank 12 über ein Membranventil 14 und eine Spülgasleitung 16 zugeführt ist, so dass der Kolben 20 in Fig. 1 nach oben getrieben ist. Dadurch hat der Kolben 20 aus der Fluidseite 24, die zuvor mit Filtrat befüllt war, dieses als unter Druck stehende Spülflüssigkeit über eine Rückspülführung 26 zum (nicht gezeigten) Kammeranschluss einer ausgewählten Elementkammer 4 zugeführt, deren Filterelement rückgespült werden soll. Die Auswahl der gewünschten, rückzuspülenden Elementkammer 4 erfolgt durch Einstellung der Drehposition des Kolbenspeichers 18 mittels eines ihm zugeordneten Drehantriebs 6. Die Rückspülmenge mit den abgelösten Verunreinigungen tritt vom reinseitigen Kammeranschluss 28 aus der Elementkammer 4 aus und verlässt über einen Rückspülausgang 32 das Primärfilter, von wo es über einen Rohrverbinder 34 zum Fluideintritt 3 der zugeordneten Nachbehandlungseinrichtung 36 gelangt.

Der Grundkörper der Nachbehandlungseinrichtung 36 ist durch ein Anschlussteil 1 gebildet, das den Träger für zwei Nachbehandlungs-Filterkammern 11 und eine die Nachbehandlungs-Steuereinrichtung bildende Steuerkammer 9 bildet, die im Zentralbereich des Anschlussteils 1 zwischen den beiden Filterkammern 11 auf der Oberseite des Anschlussteils 1 angeordnet ist. Die Steuerkammer 9 ist, wie die Kammergehäuse 38 der Filterkammern 11, an der oberen Deckwand 40 des Anschlussteils 1 derart angeflanscht, dass Steuerkammer 9 und Kammergehäuse 38 der Filterkammern zu dem unter der Deckwand 40 befindlichen inneren Hohlraum offen sind, der im Anschlussteil 1 einen zwischen den Filterkammern 11 und der Steuerkammer 9 durchgehenden Kanal 13 bildet.

Mit der Längsachse der Steuerkammer 9 fluchtend, mündet in diesen Kanal 13 der Fluideinlass 3 ein, der über die Rohrverbindung 34 mit dem Rückspülausgang 32 des Primärfilters verbunden ist. In der Rohrverbindung 34 befindet sich eine Ventilsteuereinrichtung, beispielsweise in Form eines federbelasteten Rückschlagventils, das beim Rückspülvorgang durch den Druck der Rückspülmenge öffnet, die vom Kolbenspeicher 18 zugeführt wird. Alternativ kann in der Rohrverbindung 34 ein motorisch betätigter Kugelhahn vorgesehen sein, beispielsweise der im genannten Dokument WO 2012/150011 A1 mit 53 bezeichnete Kugelhahn der Primärfilters.

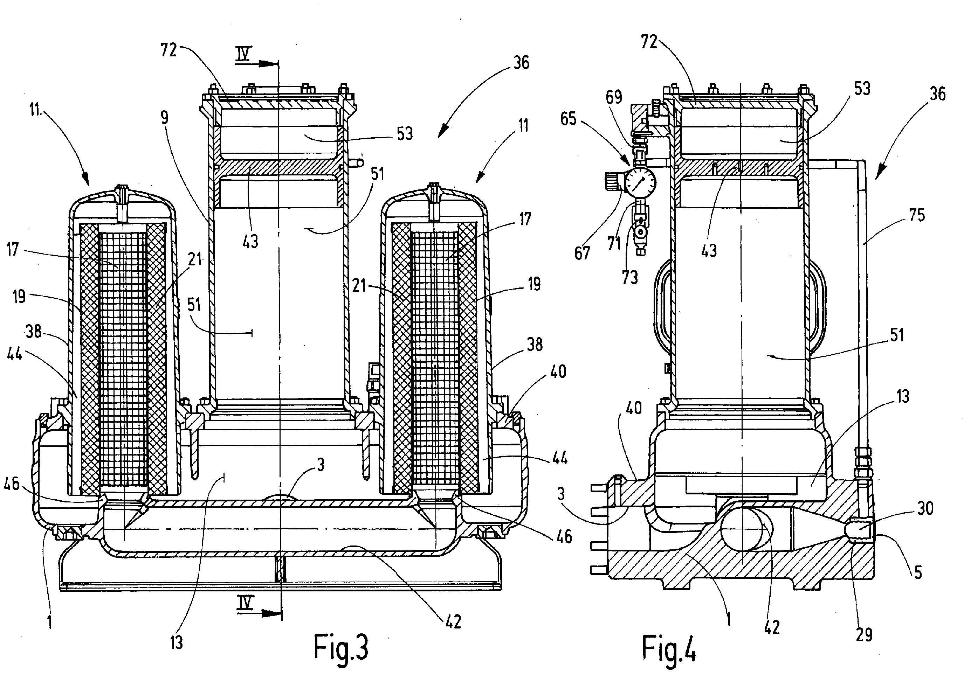

Wie am besten aus Fig. 3 zu ersehen ist, verläuft im Bodenbereich des Innenraums des Anschlussteils 1 ein Innenrohr 42 in Horizontalrichtung zwischen den Filterkammern 11. An beiden Enden des Innenrohres 42 befindet sich eine Öffnung, deren Rand eine Elementaufnahme 46 bildet, auf der ein in der zugeordneten Filterkammer 11 befindliches Filterelement 19 derart aufgenommen ist, dass der innere Filterhohlraum 17 jedes Filterelements 19 mit dem Innenrohr 42 in Fluidverbindung ist. Beim Vorgang der Aufbereitungs-Filtration, bei dem das den inneren Hohlraum 17 umgebende Filtermaterial 21 von außen her nach innen durchströmt ist, bildet dadurch das Innenrohr 42 die Filtratseite, von der die aufbereitete Rückspülmenge zum Fluidaustritt 5 gelangt, an dem sich ein Rückschlagventil 29 mit einem Schließkörper 30 befindet. Dieses kann, um ein Leerlaufen des Systems zu verhindern, leicht in die Schließstellung vorgespannt sein.

Die auf der Deckwand 40 des Anschlussteils 1 angeflanschte Steuerkammer 9 ist durch einen Kreiszylinder gebildet, der mit einem in ihm längsverfahrbaren Trennkolben 43 einen hydropneumatischen Kolbenspeicher bildet, der am oberen Ende durch einen Deckel 72 geschlossen ist. Der Trennkolben 43 trennt einen ersten Fluidraum 51, der mit dem Kanal 13 im Anschlussteil 1 in Verbindung ist und daher eine vom Fluideintritt 3 her einströmende Rückspülmenge aufnimmt, von einem zweiten Fluidraum 53, der für ein den Trennkolben 43 beaufschlagbares Druckmedium, im vorliegenden Fall von Druckluft, vorgesehen ist. An dem den zweiten Fluidraum 43 abschließenden Deckel 72 befindet sich eine Ventilsteuereinrichtung 65, mittels deren das Druckniveau im zweiten Fluidraum 53 der Steuerkammer 9 derart steuerbar ist, dass aufeinanderfolgende Aufbereitungs-Filtrationen portionsweise mit jeweils einer Rückspülmenge erfolgen, die die Steuerkammer 9 durch Hubbewegungen des Kolbens 43 zur Verfügung stellt, die durch einen im zweiten Fluidraum 53 herrschenden Arbeitsdruck erzeugt sind.

Zu diesem Zweck weist die Ventilsteuereinrichtung 65 ein elektrisch steuerbares 3/2-Wegeventil 67 auf, von dem ein Anschluss 69 zum zweiten Fluidraum 53 der Steuerkammer 9 führt. Ein zweiter Anschluss 71 führt über eine einstellbare Drossel 73 zu dem als Druckluftquelle dienenden Spülgastank 12 (Fig. 1) des Primärfilters. Eine mit der Anschlussleitung 69 verbundene Druckentlastungsleitung 75, die zum Fluidaustritt 5 führt, ermöglicht eine Druckentlastung des zweiten Fluidraums 53.

Bei dieser Bauweise ergibt sich folgender Funktionsablauf:
Bei dem in Fig. 1 bis 4 gezeigten Ausgangszustand, bei dem die zweite Fluidkammer 53 der Steuerkammer 9 über die Leitung 75 druckentlastet ist, hat die vom Kanal 13 her in den ersten Fluidraum 51 einströmende Rückspülmenge den Kolben 43 in die gezeigte obere Endstellung bewegt. Zum Einleiten eines Aufbereitungsvorgangs wird das Ventil 65 so umgeschaltet, dass Druckluft einströmt und den Trennkolben 43 belastet, so dass er sich nach unten bewegt, so dass die im ersten Fluidraum 51 befindliche Rückspülmenge ausgetrieben und über den Kanal 13 und über die offenen Enden der Filterkammern 11 zur Unfiltratseite 44 gelangt, die sich zwischen der Außenseite des Filtermaterials 21 der Filterelemente 19 und der Kammerwand 38 der zugehörigen Filterkammer 11 befindet. Durch den vom Kolbenspeicher erzeugten Druck des Unfiltrats hat sich das in der Rohrverbindung 34 befindliche Rückschlagventil geschlossen, oder es wurde ein gegebenenfalls vorgesehenes Motorventil bei Beendigung eines Rückspülvorgangs des Primärfilters geschlossen. Der Aufbereitungs-Filtrationsvorgang findet dadurch unter dem vom Arbeitsdruck im zweiten Fluidraum 53 der Steuerkammer 9 generierten Filtrationsdruck statt, wobei das gebildete Filtrat über das Innenrohr 42 aus dem die Filtratseite bildenden inneren Hohlraum 17 der Filterelemente 19 zum Fluidaustritt 5 bei geöffnetem Rückschlagventil 29 abströmt. Wie die Fig. 3 am deutlichsten zeigt, haben die Kammergehäuse 38 der Filterkammern 11 in Richtung auf ihr geschlossenes oberes Ende hin einen geringfügig sich konisch verjüngenden Verlauf, so dass sich der Strömungsquerschnitt der Unfiltratseite 44 von der unteren Einströmstelle nach oben hin verringert, wodurch sich für eine homogene Durchströmung des Filtermaterials 21 günstige Strömungsverhältnisse ergeben.

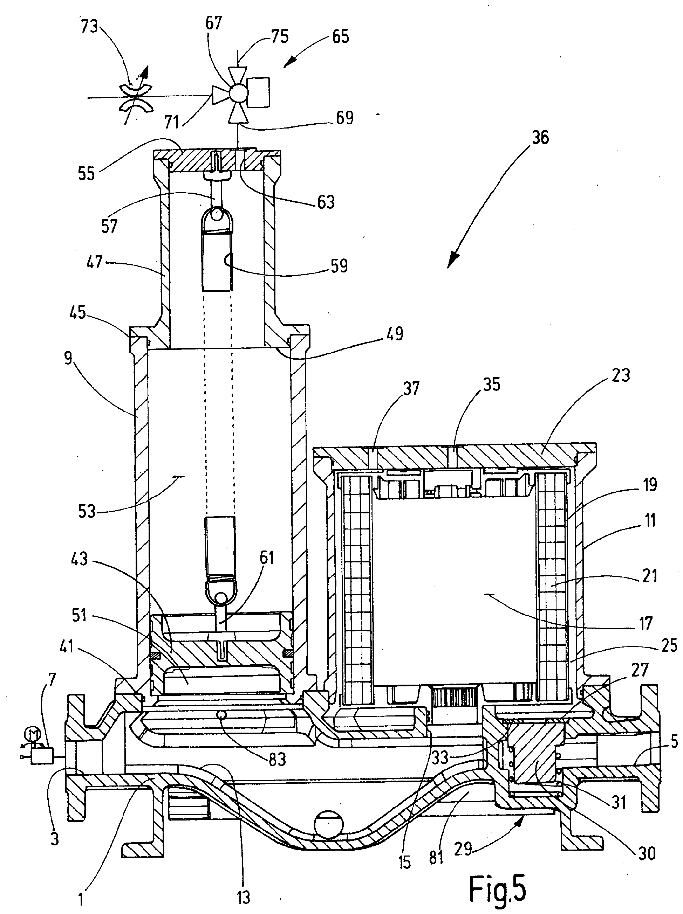

Die Fig. 5 bis 7 zeigen die Nachbehandlungseinrichtung 36 einer zweiten Ausführungsform des erfindungsgemäßen Systems. Bei diesem Beispiel befindet sich die Steuerkammer 9 auf der Oberseite des Anschlussteils 1 in der Nähe des Fluideintritts 3 und die lediglich eine Filterkammer 11 ist am Anschlussteil 1 zum Fluidaustritt 5 hin versetzt, der sich an dem dem Fluideintritt entgegengesetzten Ende des Anschlussteils 1 befindet. Dem Fluideintritt 3 ist ein in Symboldarstellung angedeutetes Motorventil 7 vorgeschaltet, das durch das am Rückspülausgang 32 des Primärfilters befindliche Motorventil gebildet sein kann, das im erwähnten Dokument WO 2012/150011 A1 mit 53 bezeichnet ist. Wie bei der ersten Ausführungsform schließt sich im Anschlussteil 1 an den Fluideintritt 3 ein Kanal 13 an, der sich in Richtung auf den Fluidaustritt 5 erstreckt, jedoch in einem Abstand von diesem im Zentralbereich der Filterkammer 11 endet und an diesem Ende einen Einlass 15 bildet, der einen Fluidweg in den inneren Filterhohlraum 17 des in der Filterkammer 11 befindlichen Filterelements 19 bildet. Das den inneren Hohlraum 17 mit seinem einen Hohlzylinder bildenden Filtermaterial 21 umgebende Filterelement 19 ist über einen abnehmbaren Gehäusedeckel 23 in die Filterkammer 11 einbau- und/oder auswechselbar.

Der beim Aufbereitungs-Filtrationsvorgang die Filtratseite bildende, das Filtermaterial 21 umgebende Raum 25 ist über einen Längskanal 27, der sich im Bereich der Filterkammer 11 entlang der Oberseite des Anschlussteiles 1 erstreckt, mit dem Fluidaustritt 5 in Verbindung, wobei die Freigabe oder der Verschluss dieser Verbindung durch eine weitere Ventilsteuereinrichtung sperrbar oder freigebbar ist, die beim gezeigten Beispiel durch ein Rückschlagventil 29 gebildet ist. Dieses ist federgesteuert und weist einen Schließkörper 30 auf, der durch eine Schließfeder 31 in die in Fig. 5 gezeigte Schließstellung vorgespannt ist, in der der Schließkörper 30 an einer Ventilplatte 33 anliegt und deren Öffnung verschließt. Das Rückschlagventil 29 ist auf einen Öffnungsdruck von etwa 0,5 bar eingestellt, so dass im Fluidsystem der Einrichtung ein entsprechender, geringer Vorspanndruck erhalten bleibt und ein Leerlaufen verhindert ist. Für den Füllvorgang der Einrichtung sind im Gehäusedeckel 23 eine Belüftungsbohrung 35, die in den die Unfiltratseite bildenden inneren Filterhohlraum 17 bildet, und eine Belüftungsbohrung 37 vorgesehen, die in den Filtratraum 25 mündet. Den Bohrungen 35, 37 zugeordnete Entlüfterelemente üblicher Bauweise sind nicht dargestellt.

Die Steuerkammer 9 weist als Hauptteil einen Kreiszylinder auf, der mit seinem in der Zeichnung unteren Ende 41 am Anschlussteil 1 in der Nähe des Fluideintritts 3 angeflanscht ist und zum Kanal 13 offen ist. Der Zylinder bildet mit dem in ihm längs verfahrbaren Trennkolben 43 einen hydropneumatischen Kolbenspeicher, der am oberen Ende 45 des Zylinders durch einen im Durchmesser verjüngten Dom 47 geschlossen ist. Das untere Ende des Domes 47 bildet am Ende 45 des Zylinders eine Anschlagfläche 49 zur Begrenzung der Verfahrbewegung des Trennkolbens 43 in der Zeichnung nach oben. Innerhalb des Zylinders und des Doms 47 trennt der Trennkolben 43 einen ersten Fluidraum 51, der mit dem Kanal 13 verbunden ist und daher eine vom Fluideintritt 3 her einströmende Rückspülmenge aufnimmt, von einem zweiten Fluidraum 53, der für ein den Trennkolben 43 beaufschlagbares Druckmedium, im vorliegenden Fall von Druckluft, vorgesehen ist. Der Dom 47 ist am oberen Ende durch eine Verschlussplatte 55 verschlossen, an deren Innenseite sich eine Verankerung 57 für eine Zugfeder 59 befindet, deren unteres Ende über eine Verankerung 61 am Trennkolben 43 angreift und diesen für eine Verfahrbewegung vorspannt, bei der sich das Volumen des ersten Fluidraumes 51 vergrößert. An der Verschlussplatte 55 befindet sich eine Anschlussstelle 63 für die Ventilsteuereinrichtung 65, mittels deren das Druckniveau im zweiten Fluidraum 53 der Steuerkammer 9 derart steuerbar ist, dass aufeinanderfolgende Aufbereitungs-Filtrationen portionsweise mit jeweils einer Rückspülmenge erfolgen, die die Steuerkammer 9 entsprechend den Hubbewegungen des Trennkolbens 43 zur Verfügung stellt.

Wie bei der ersten Ausführungsform weist die Ventilsteuereinrichtung 65 ein elektrisch steuerbares 3/2-Wegeventil 67 auf, von dem eine Anschlussleitung 69 zur Anschlussstelle 63 an der Steuerkammer 9 führt. Eine zweite Anschlussleitung 71 führt über eine einstellbare Drossel 73 zu einer Druckluftquelle. Eine dritte Anschlussleitung 75 des Ventils 67 ermöglicht eine Druckentlastung nach außen.

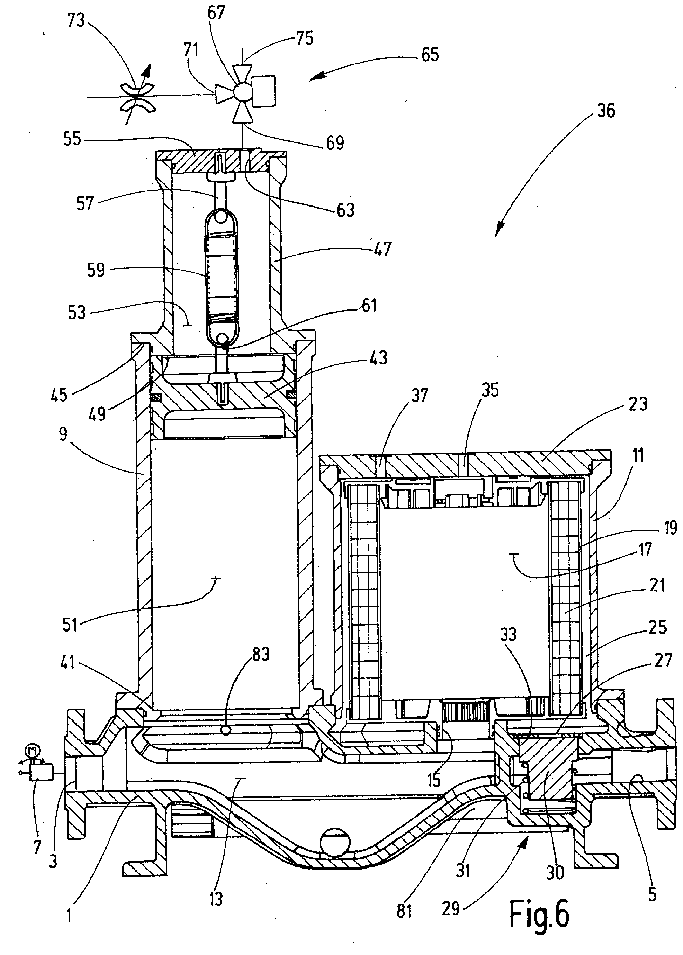

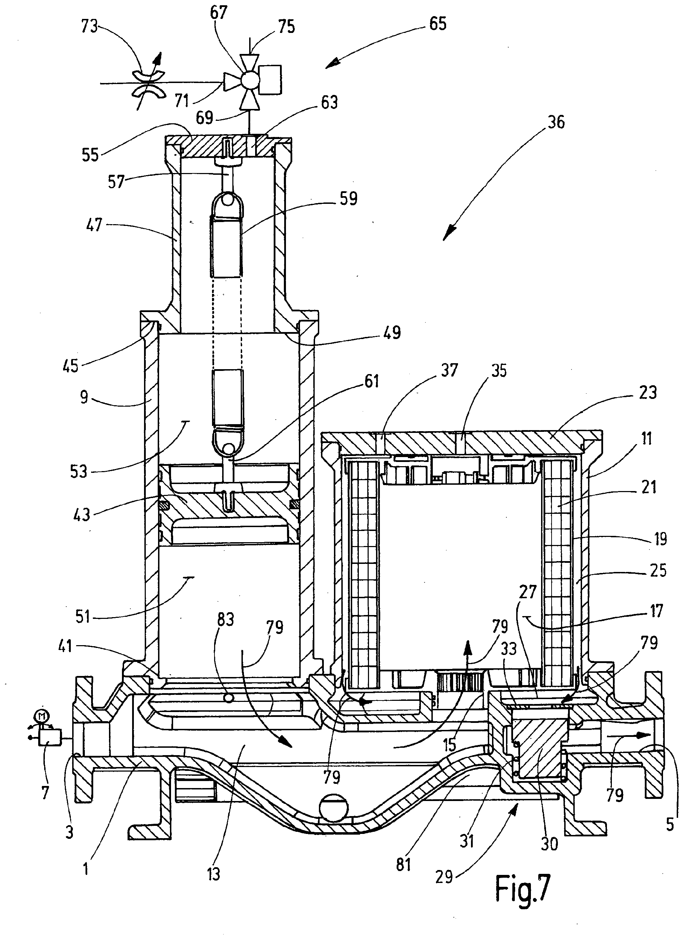

Die Fig. 5 zeigt die Ausgangssituation, bei der der Kanal 13 und die Filterkammer 11 mit Unfiltrat befüllt und mittels der Bohrungen 35 und 37 entlüftet sind. Der zweite Fluidraum 53 ist über das Ventil 67 mit Druckluft befüllt, so dass der Trennkolben 43 durch Druck beaufschlagt und gegen die Kraft der ausgezogenen Zugfeder 59 in der in Fig. 5 gezeigten, unteren Stellung gehalten ist. Wird im vorgeschalteten Primärfilter eine Rückspülung ausgelöst, wird nunmehr, bei geöffnetem Motorventil 7, das 3/2-Wegeventil 65 umgeschaltet, um die Druckluft aus dem zweiten Fluidraum 53 abzulassen. Die Zugfeder 59 zieht nunmehr den entlasteten Trennkolben 43 in die in Fig. 6 gezeigte Stellung nach oben, so dass ein Saugeffekt entsteht und eine Rückspülmenge gegendrucklos über den Fluideintritt 3 einströmt und bei Erreichen der oberen Endlage des Trennkolbens 43, s. Fig. 6, sowohl die Filterkammer 11 als auch der Zylinder der Steuerkammer 9 mit Rückspülflüssigkeit gefüllt sind. Bei nunmehr geschlossenem Motorventil 7 wird das Ventil 65 so umgeschaltet, dass über die Drossel 73 Druckluft einströmt und den Trennkolben 43 derart belastet, dass er sich gegen die Kraft der Zugfeder 59 nach unten bewegt. Für die Aufbereitungs-Filtration wird dadurch, wie in Fig. 7 gezeigt, die im Zylinder der Steuerkammer 9 befindliche Menge der Rückspülflüssigkeit ausgetrieben und über den Kanal 13 und den Einlass 15 zur Filterkammer 11 gefördert. Das nach Durchströmen des Filtermaterials 21 gebildete Filtrat strömt aus dem das Filterelement 19 umgebenden Filtratraum 25 zum Längskanal 27 ab. Da der Filtrationsvorgang unter dem vom Arbeitsdruck im zweiten Fluidraum 53 der Steuerkammer 9 generierten Filtrationsdruck erfolgt, öffnet das Rückschlagventil 29 die Verbindung zum Fluidaustritt 5. Der sich beim Filtrationsvorgang ergebende Strömungsverlauf ist in Fig. 7 mit Strömungspfeilen 79 angedeutet.

Wie bei der ersten Ausführungsform lässt sich durch Einstellen der Höhe des Luftdrucks in dem zweiten Fluidraum 53 und die Einstellung der Verfahrgeschwindigkeit des Trennkolbens 43 mittels der Drossel 73 der Filtrationsdruck zur optimalen Anpassung an die Natur und Viskosität der Rückspülflüssigkeit einstellen. Für hochviskose Fluide, wie Schweröl, lässt sich eine günstige Temperierung mittels eines mit dem Kanal 13 in Wärmekontakt stehenden Heizelementes 81 erreichen, wobei eine elektrische Versorgung des Heizelements 81 oder die Versorgung mittels zur Verfügung stehenden Prozessdampfes vorgesehen sein kann. Für eine optimale Druck- und Temperatureinstellung kann ein elektronischer Druck- und Temperaturmesssensor 83 in Kontakt mit dem im Kanal 13 befindlichen Fluid vorgesehen sein.

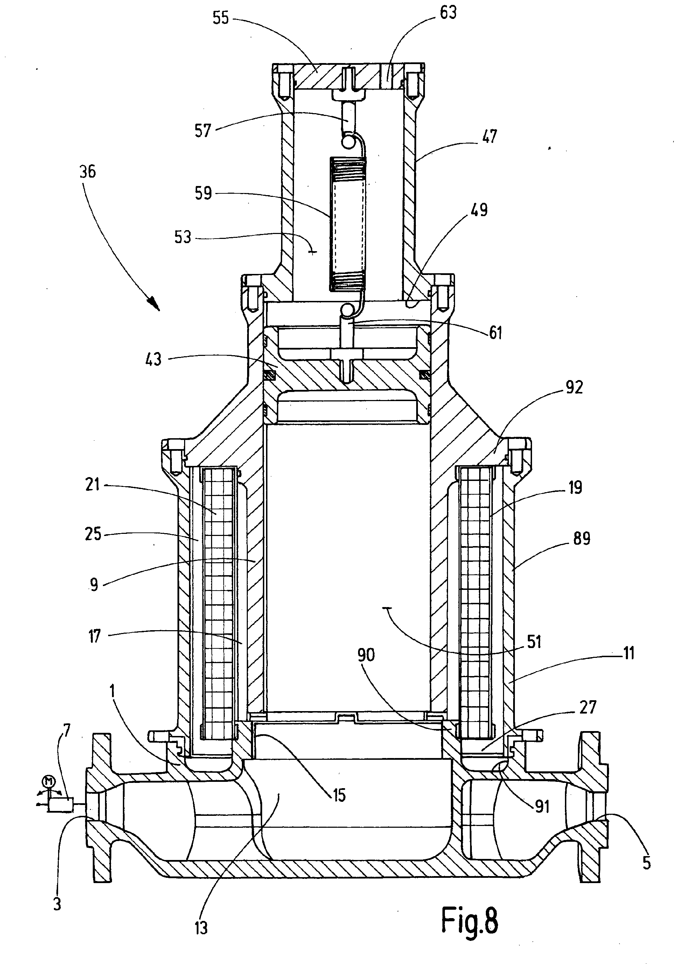

Die Fig. 8 zeigt ein abgewandeltes Ausführungsbeispiel, bei dem die Funktionsweise der Funktionsweise des zuvor beschriebenen Ausführungsbeispiels identisch entspricht. Von den Ventilsteuereinrichtungen ist daher das 3/2-Wegeventil 67 an der Anschlussstelle 63 des Domes 47 in der Zeichnung weggelassen, wie auch das dem Fluidaustritt 5 zugeordnete Rückschlagventil 29 in der Zeichnung weggelassen ist. Der Unterschied gegenüber dem vorherigen Ausführungsbeispiel besteht darin, dass die Steuerkammer 9 koaxial innerhalb der Filterkammer 11 angeordnet ist. Letztere weist einen Kreiszylinder 89 auf, der mit dem Anschlussteil 1, mittig zwischen dessen Fluideintritt 3 und Fluidaustritt 5, verflanscht ist. Der vom Kanal 13 in den inneren Filterhohlraum führende Einlass 15 bildet an der Außenseite seines hochstehenden Randes 90 die Elementaufnahme für das untere Ende des Filterelements 19, dessen hohlzylinderförmiges Filtermaterial 21 den das Unfiltrat enthaltenden inneren Hohlraum 17 vom Filtratraum 25 trennt, der sich zwischen der Außenseite des Filtermaterials 21 und dem Zylinder 89 befindet. Dieser Filtratraum 25 ist, wie beim vorigen Ausführungsbeispiel über einen Längskanal 27 und eine an diesem befindliche Ausströmöffnung 91 mit dem Fluidaustritt 5 in Verbindung.

Der Zylinder 89 der Filterkammer 11 ist am oberen Ende durch ein Flanschteil 92 des Zylinders der Steuerkammer 9 abgeschlossen. Vom Flanschteil 92 weg erstreckt sich der Zylinder bis kurz vor den hochstehenden Rand 90 am Einlass 15, so dass ein Zwischenraum für die Fluidverbindung zum die Unfiltratseite bildenden Raum 17 besteht. Wie beim vorherigen Ausführungsbeispiel bildet ein Dom 47 wiederum den oberen Abschluss der Steuerkammer 9 sowie die Anschlagfläche 49 als Endanschlag für den Trennkolben 43. Wie zuvor befinden sich an der Verschlussplatte 55 des Doms 47 die Verankerung 57 für das obere Ende der Zugfeder 59 sowie die Anschlussstelle 63 für die das 3/2-Wegeventil 67 aufweisende Ventilsteuereinrichtung 65.

## Patentansprüche

1. System zum Filtrieren von Fluiden, mit einem Primärfilter (2), das mindestens ein Filterelement aufweist, das beim Filtrationsvorgang in einer Richtung durchströmbar und für einen Rückspülvorgang in dazu entgegengesetzter Richtung durchströmbar ist, mit einer dem Primärfilter (2) zum Aufbereiten der von diesem abgegebenen Rückspülmengen nachgeschalteten Nachbehandlungseinrichtung (36), die zumindest eine die Rückspülmengen aufnehmende Filterkammer (11) mit Fluideintritt und Fluidaustritt und mit mindestens einem Nachbehandlungs-Filterelement (19) aufweist, und mit einer Steuereinrichtung (9) zum portionsweisen Zuführen der jeweiligen Rückspülmenge zum zuordenbaren Nachbehandlungs-Filterelement (19), **dadurch gekennzeichnet, dass** die Steuereinrichtung eine Steuerkammer (9) aufweist mit einem ersten (51) und einem zweiten Fluidraum (53), von denen der erste (51) der Aufnahme der jeweiligen Rückspülmenge dient und der zweite Fluidraum (53) mit einem Druckgas mit einem vorgebbaren Arbeitsdruck beaufschlagbar ist; und dass erster (51) und zweiter Fluidraum (53) der Steuerkammer (9) von einem Trennkolben (43) separiert sind.

2. System nach Anspruch 1, **dadurch gekennzeichnet, dass** das Druckgas die Form von Druckluft hat.

3. System nach Anspruch 1 oder 2, **dadurch gekennzeichnet, dass** für die Zu- und Abfuhr des Druckgases in den bzw. aus dem zweiten Fluidraum (53) der Steuerkammer (9) eine Ventilsteuereinrichtung (65) dient, insbesondere in Form eines elektrisch ansteuerbaren 3/2-Wegeventiles (67), das druckgasführend mit dem zweiten Fluidraum (53) der Steuerkammer (9) verbunden ist.

4. System nach einem der vorstehenden Ansprüche, **dadurch gekennzeichnet, dass** der erste Fluidraum (51) der Steuerkammer (9) fluidführend mit der Unfiltratseite (17; 44) des jeweiligen Filterelementes (19) innerhalb der Filterkammer (11) permanent verbunden ist und dass die Filtratseite (17; 25), die über das jeweilige Filterelement (19) von dessen Unfiltratseite (17; 44) getrennt ist, zumindest zeitweise eine fluidführende Verbindung mit dem Fluidaustritt (5) aufweist.

5. System nach einem der vorstehenden Ansprüche, **dadurch gekennzeichnet, dass** zwischen der Filtratseite des jeweiligen Filterelementes (19) innerhalb der Filterkammer (11) und dem Fluidaustritt (5) in die dahingehende Fluidverbindung eine weitere Ventilsteuereinrichtung geschaltet ist, insbesondere in Form eines vorzugsweise federbelasteten Rückschlagventils (29).

6. System nach einem der vorstehenden Ansprüche, **dadurch gekennzeichnet, dass** auf der Seite des Fluideintritts (3) eine weitere, dritte Ventilsteuereinrichtung (7; 34) vorhanden ist, die den Zutritt der jeweiligen Rückspülmenge vom Primärfilter (2) kommend in die Nachbehandlungseinrichtung (36) steuert.

7. System nach einem der vorstehenden Ansprüche, **dadurch gekennzeichnet, dass** in Fluidströmungsrichtung gesehen die Steuerkammer (9) der Filterkammer (11) mit dem jeweiligen Filterelement (19) vorgeschaltet ist oder dass die Filterkammer (11) mit dem jeweiligen Filterelement (19) konzentrisch zur Steuerkammer (9) angeordnet ist und diese umfasst.

8. System nach einem der vorstehenden Ansprüche, **dadurch gekennzeichnet, dass** an dem Trennkolben (43) ein Energiespeicher, vorzugsweise in Form einer Zugfeder (59), angreift und dass der Energiespeicher den zweiten Fluidraum (53) der Steuerkammer (9) durchgreift.

9. System nach einem der vorstehenden Ansprüche, **dadurch gekennzeichnet, dass** die Nachbehandlungseinrichtung (36) ein mit dem Primärfilter (2) verbindbares Anschlussteil (1) mit dem Fluideintritt (3) für Rückspülmengen und dem Fluidaustritt (5) für nachbehandelte Rückspülmengen aufweist, das den Träger für die Steuerkammer (11) und zwei ihr gemeinsam zugeordnete Filterkammern (11) bildet, die beidseits neben der Steuerkammer (9) derart angeordnet sind, dass innerhalb des Anschlussteils (1) der erste Fluidraum (51) der Steuerkammer (9) permanent mit der Unfiltratseite (44) jeder der Filterkammern (11) verbunden ist, deren Filtratseiten (17) innerhalb des Anschlussteils (1) zumindest zeitweise mit dem Fluidaustritt (5) in Verbindung sind.

10. System nach einem der vorstehenden Ansprüche, **dadurch gekennzeichnet, dass** zumindest im fluidführenden Verbindungsbereich (13) zwischen Steuerkammer (9) und jeweiliger Filterkammer (11) eine Heizung (81) und/oder eine elektronische Druck- und/oder Temperaturmesseinrichtung (83) angeordnet ist.

11. System nach einem der vorstehenden Ansprüche, **dadurch gekennzeichnet, dass** die Nachbehandlungseinrichtung (36) dem Primärfilter (2) derart zugeschaltet ist, dass die am Fluidaustritt (5) der Nachbehandlungseinrichtung (36) anfallende Fluidmenge auf die Unfiltratseite des Primärfilters (2) unter Bildung eines geschlossenen Kreises rückführbar ist.

## Claims

1. System for filtering fluids, with a primary filter (2) which comprises at least one filter element, through which fluid can flow in one direction during the filtration operation and fluid can flow in the opposite direction thereto for a back-flushing operation, with a post-treatment apparatus (36) connected downstream of the primary filter (2) to treat the back-flushing volumes discharged from said primary filter, said apparatus comprising at least one filter chamber (11) receiving the back-flushing volumes with a fluid inlet and a fluid outlet, and comprising at least one post-treatment filter element (19), and with a control apparatus (9) for supplying the respective back-flushing volume in portions to the post-treatment filter element (19) to which it can be assigned, **characterised in that** the control apparatus comprises a control chamber (9) with a first (51) and a second fluid space (53), the first (51) of these spaces serving to receive the respective back-flushing volume and a compressed gas being able to be applied to the second fluid space (53) at a pre-definable operating pressure; and **in that** the first (51) and second fluid space (53) of the control chamber (9) are separated by a separator piston (43).

2. System according to claim 1, **characterised in that** the compressed gas takes the form of compressed air.

3. System according to either claim 1 or claim 2, **characterised in that** a valve control apparatus (65), particularly in the form of a 3/2 directional control valve (67), which can be controlled by electrical means and which is connected to the second fluid space (53) of the control chamber (9) such as to convey compressed gas, serves to supply and remove the compressed gas into or from the second fluid space (53) of the control chamber (9).

4. System according to any one of the preceding claims, **characterised in that** the first fluid space (51) of the control chamber (9) is permanently connected in a fluid-conveying manner to the unfiltered medium side (17; 44) of the respective filter element (19) inside the filter chamber (11), and **in that** the filtrate side (17; 25), which is separated via the respective filter element (19) from the unfiltered medium side thereof (17; 44), at least sometimes comprises a fluid-conveying connection with the fluid outlet (5).

5. System according to any one of the preceding claims, **characterised in that** a further valve control apparatus, especially in the form of a preferably spring-loaded check valve (29), is connected between the filtrate side of the respective filter element (19) inside the filter chamber (11) and the fluid outlet (5) into the associated fluid connection.

6. System according to any one of the preceding claims, **characterised in that** a further, third valve control apparatus (7; 34) is provided on the side of the fluid inlet (3), said apparatus controlling access of the respective back-flushing volume from the primary filter (2) to the post-treatment apparatus (36).

7. System according to any one of the preceding claims, **characterised in that**, viewed in the fluid flow direction, the control chamber (9) is connected upstream of the filter chamber (11) with the respective filter element (19), or **in that** the filter chamber (11) with the respective filter element (19) is arranged concentrically with respect to the control chamber (9), and encloses said chamber.

8. System according to any one of the preceding claims, **characterised in that** an energy accumulator, preferably in the form of a tension spring (59), acts on the separator piston (43), and **in that** the energy accumulator passes through the second fluid space (53) of the control chamber (9).

9. System according to any one of the preceding claims, **characterised in that** the post-treatment apparatus (36) comprises a connection part (1), which can be connected to the primary filter (2), with the fluid inlet (3) for back-flushing volumes and the fluid outlet (5) for post-treated back-flushing volumes, said connection part forming the support for the control chamber (11) and two filter chambers (11) jointly assigned to said control chamber, these chambers being arranged on both sides of and adjacent to the control chamber (9) in such a way that the first fluid space (51) of the control chamber (9) inside the connection part (1) is permanently connected to the unfiltered medium side (44) of each of the filter chambers (11), the filtrate sides (17) of which, inside the connection part (1), are at least sometimes connected to the fluid outlet (5).

10. System according to any one of the preceding claims, **characterised in that** a heating system (81) and/or an electronic pressure and/or temperature measurement apparatus (83) is arranged at least in the fluid-conveying connection region (13) between the control chamber (9) and the respective filter chamber (11).

11. System according to any one of the preceding claims, **characterised in that** the post-treatment apparatus (36) is connected to the primary filter (2) in such a way that the fluid volume accruing at the fluid outlet (5) of the post-treatment apparatus (36) can be returned to the unfiltered medium side of the primary filter (2), forming a closed circuit.

## Revendications

1. Système de filtration de fluides, comprenant un filtre (2) primaire ayant au moins un élément de filtre pouvant être traversé dans un sens lors de l'opération de filtration et pouvant être traversé en sens contraire dans une opération de lavage en retour, comprenant un dispositif (36) de post-traitement, monté en aval du filtre (2) primaire, pour le traitement des quantités de lavage en retour cédées par celui-ci, et ayant au moins une chambre (11) de filtre, recevant les quantités de lavage en retour et ayant une entrée de fluide et une sortie de fluide et au moins un élément (19) de filtre de post-traitement, et comprenant un dispositif (9) de commande pour l'envoi par portion de la quantité de lavage en retour respective à l'élément (19) de filtre de post-traitement pouvant être associé, **caractérisé en ce que** le dispositif de commande à une chambre (9) de commande, ayant un premier (51) et un deuxième espace (53) pour du fluide, dont le premier (51) sert à la réception de la quantité respective de lavage en retour et le deuxième espace (53) pour du fluide peut être alimenté en un gaz comprimé ayant une pression de travail d'un gaz sous pression donnée à l'avance et **en ce que** le premier (51) et le deuxième espace (43) pour du fluide de la chambre (9) de commande sont séparés par un piston (43)de séparation.

2. Système de filtration de fluide, suivant la revendication 1, **caractérisé en ce que** le gaz sous pression à la forme d'air comprimé.

3. Système de filtration de fluide suivant la revendication 1 ou 2, **caractérisé en ce que**, pour l'envoi et l'évacuation du gaz sous pression dans ou hors du deuxième espace (53) pour du fluide de la chambre (9) de commande, sert un dispositif (65) de commande de vanne, notamment sous la forme d'une vanne (67) à 3/2 voies, pouvant être excitée électriquement, qui, en conduisant du gaz sous pression, communique avec le deuxième espace (53) pour du fluide de la chambre (9) de commande.

4. Système de filtration de fluide suivant l'une des revendications précédentes, caractérisé le premier espace (51) pour du fluide de la chambre (9) de commande communique de manière permanente fluidiquement avec le côté (17 ;44) du non filtrat de l'élément (19) de filtre respectif à l'intérieur de la chambre (11) de filtre et en ce que le côté (17 ;25) du filtrat, qui est séparé du côté (17 ;44) du non filtrat par l'élément (19) de filtre respectif, a au moins de temps en temps une communication fluidique avec la sortie (5) de fluide.

5. Système de filtration de fluide suivant l'une des revendications précédentes, **caractérisé en ce qu'**entre le côté du filtrat de l'élément (19) de filtre respectif à l'intérieur de la chambre (11) de filtre et la sortie (5) de fluide est monté, dans la liaison pour du fluide, un autre dispositif de commande de vanne, notamment sous la forme d'un clapet anti-retour (29), de préférence soumis à l'action d'un ressort.

6. Système de filtration de fluide suivant l'une des revendications précédentes, **caractérisé en ce que**, du côté de l'entrée (3) de fluide, il y a un autre troisième dispositif (7;34) de commande de vanne, qui commande l'accès de la quantité de lavage en retour respective venant du filtre (2) primaire au dispositif (36) de post-traitement.

7. Système de filtration de fluide suivant l'une des revendications précédentes, **caractérisé en ce que**, considéré dans le sens d'écoulement du fluide, la chambre (9) de commande de la chambre (11) du filtre est montée en amont de l'élément (19) de filtre respectif ou **en ce que** la chambre (11) de filtre est, avec l'élément (19) de filtre respectif, disposée concentriquement à la chambre (9) de commande et entoure celle-ci.

8. Système de filtration de fluide suivant l'une des revendications précédentes, **caractérisé en ce qu'**un accumulateur d'énergie, de préférence sous la forme d'un ressort (59) de traction, attaque le piston (43) de séparation et **en ce que** l'accumulateur d'énergie traverse le deuxième espace (53) pour du fluide de la chambre (9) de commande.

9. Système de filtration de fluide suivant l'une des revendications précédentes, **caractérisé en ce que** le dispositif (56) de post-traitement a une partie (1) de raccordement, qui peut être reliée au filtre (2) primaire, qui a l'entrée (3) de fluide pour des quantités de lavage en retour et la sortie (5) de fluide pour des quantités de lavage en retour post-traités et qui forme le support de la chambre (11) de commande et de deux chambres (11) du filtre, qui lui sont associées conjointement et qui sont disposées de part et d'autres à côté de la chambre (9) de commande, de manière à ce que, à l'intérieur de la partie (1) de raccordement, le premier espace (51) pour du fluide de la chambre (9) de commande communique en permanence avec le côté (44) du non filtrat de chacune des chambres (11) du filtre, dont les côtés (17) du filtrat à l'intérieur de la partie (1) de raccordement communiquent, au moins de temps en temps, avec la sortie (5) de fluide.

10. Système de filtration de fluide suivant l'une des revendications précédentes, **caractérisé en ce qu'**au moins dans la partie (13) de communication fluidique, entre la chambre (9) de commande et la chambre (11) du filtre respective, est monté un chauffage (81) et/ou un dispositif (83) électronique de mesure de la pression et/ou de la température.

11. Système de filtration de fluide suivant l'une des revendications précédentes, **caractérisé en ce que** le dispositif (36) de post-traitement est associé au filtre (2) primaire de manière à ce que la quantité de fluide, se produisant à la sortie (5) de fluide du dispositif (36) de post-traitement, puisse être retournée au côté du non filtrat du filtre (2) primaire en formant un circuit fermé.
